# EUROPEAN PATENT SPECIFICATION

(11) **EP 1 785 458 B1**
(45) Date of publication and mention of the grant of the patent: **13.11.2013**
(21) Application number: 05781347.9
(22) Date of filing: 01.09.2005
(51) Int. Cl.: C09D 183/04, C09D 183/06, C09D 7/12, B32B 27/00, B32B 27/36, C08J 7/04, C09C 1/36, C09C 3/06, C09C 3/08, C09C 3/12, G02C 7/02

(54) **COATING LIQUID FOR FORMING TRANSPARENT COATING FILM AND BASE WITH TRANSPARENT COATING FILM**
LACKFLÜSSIGKEIT ZUR AUSBILDUNG EINES TRANSPARENTEN LACKFILMS SOWIE UNTERLAGE MIT TRANSPARENTEM LACKFILM
LIQUIDE DE REVETEMENT POUR FORMER UN FILM DE REVETEMENT TRANSPARENT ET BASE COMPORTANT UN FILM DE REVETEMENT TRANSPARENT

(30) Priority: 01.09.2004 JP 2004254559
(43) Date of publication of application: 16.05.2007
(73) Proprietor: JGC Catalysts and Chemicals Ltd., Kawasaki-shi Kanagawa (JP)
(72) Inventor: MURAI, Sachio, Kawasaki-shi Kanagawa-2120013 (JP); MIYANO, Yoshifumi, Kitakyushu-shi Fukuoka 8080027 (JP); TANAKA, Hirokazu, Kitakyushu-shi Fukuoka 8080027 (JP)
(74) Representative: Matthews, Derek Peter
(86) International application number: PCT/JP2005/016029
(87) International publication number: WO 2006/025499

(56) References cited:
- JP-A- 5 001 258
- JP-A- 5 001 258
- JP-A- 5 098 214
- JP-A- 5 098 214
- JP-A- 7 076 671
- JP-A- 7 076 671
- JP-A- 8 239 627
- JP-A- 8 239 627
- JP-A- 11 172 152
- JP-A- 11 172 152
- JP-A- 2000 206 305
- JP-A- 2000 206 305
- JP-A- 2002 363 442
- JP-A- 2002 363 442
- JP-A- 2003 055 601
- JP-A- 2003 055 601

## Description

### TECHNICAL FIELD

The present invention relates to a novel transparent film-forming coating liquid and a substrate with a transparent film formed from the transparent film-forming coating liquid.

### BACKGROUND ART

Because of their excellent properties such as processability and impact resistance, optical plastic molded articles composed of transparent resins came to be applied to uses to which glasses were heretofore applied.
The transparent resin is used by properly selecting a refractive index according to the use application.

In a field of, for example, spectacle lenses, an attempt to decrease the lens thickness by the use of a high-refractive index resin material has been actively made because if a low-refractive index resin material is used, outer peripheral portions of the lenses tend to become thicker as compared with glass lenses. In Japanese Patent Laid-Open Publication No. 133211/1984 (patent document 1), Japanese Patent Laid-Open Publication No. 46213/1988 (patent document 2), Japanese Patent Laid-Open Publication No. 270859/1990 (patent document 3), etc., high-refractive index resin materials having a refractive index of 1.60 or more are proposed as such an attempt.

On the other hand, the plastic spectacle lenses have a drawback of being readily marred. On this account, a method of providing a silicone-based hard coat film on the plastic lens surface is generally carried out. However, if a similar method is applied to high-refractive index resin lenses having a refractive index of not less than 1.54, interference fringe attributable to a difference in refractive index between the resin lens and the coating film takes place, and this sometimes causes bad appearance. In order to solve this problem, composite inorganic oxide fine particles of titanium oxide and cerium oxide are disclosed as high-refractive index hard coating materials having a small difference in refractive index from the transparent resin in Japanese Patent Laid-Open Publication No. 264902/1990 (patent document 4), and a coating composition containing fine particles obtained by treating oxide particles containing titanium oxide and if necessary cerium oxide with an organosilicon compound is disclosed in Japanese Patent Laid-Open Publication No. 68901/1991 (patent document 5).
Further, in Japanese Patent Laid-Open Publication No. 2102/1993 (patent document 6), a hard coat film using titanium oxide-iron oxide composite oxide fine particles is disclosed, and in Japanese Patent Laid-Open Publication No. 76671/1995 (patent document 7), a coating composition, which contains particles obtained by treating composite oxide fine particles of titanium oxide and iron oxide with an organosilicon compound and contains an unsaturated polycarboxylic acid and a thermosetting catalyst such as imidazole, and a cured film are disclosed.

Moreover, in Japanese Patent Laid-Open Publication No. 48940/1996 (patent document 8), a coating composition for lenses, which comprises a composite inorganic oxide of Ti, Si, Zr and/or Al and a matrix, is disclosed.

As a substrate for such lenses, an optical material composed of an episulfide compound having a high refractive index of 1.67 to 1.70 and having an Abbe's number of more than 30 is proposed in Japanese Patent Laid-Open Publication No. 71580/1997, Japanese Patent Laid-Open Publication No. 110979/1997 and Japanese Patent Laid-Open Publication No. 255781/1997. In Japanese Patent Laid-Open Publication No. 204301/2000 (patent document 9), it is disclosed that for a hard coat film used for such an optical material, fine particles each of which comprises a core particle composed of a composite solid solution oxide of titanium oxide and tin oxide and a coating layer formed thereon that is composed of a composite oxide of silicon oxide, zirconium oxide and/or aluminum oxide are preferably employable.

In Japanese Patent Laid-Open Publication No. 363442/2002 (patent document 10), the present applicant has proposed that metal oxide fine particles each of which comprises a titanium oxide-containing core particle and an antimony oxide coating layer are used for a hard coat film of a lens or the like.
Patent document 1: Japanese Patent Laid-Open Publication No. 133211/1984
Patent document 2: Japanese Patent Laid-Open Publication No. 46213/1988
Patent document 3: Japanese Patent Laid-Open Publication No. 270859/1990
Patent document 4: Japanese Patent Laid-Open Publication No. 264902/1990
Patent document 5: Japanese Patent Laid-Open Publication No. 68901/1991
Patent document 6: Japanese Patent Laid-Open Publication No. 2102/1993
Patent document 7: Japanese Patent Laid-Open Publication No. 76671/1995
Patent document 8: Japanese Patent Laid-Open Publication No. 48940/1996
Patent document 9: Japanese Patent Laid-Open Publication No. 204301/2000
Patent document 10: Japanese Patent Laid-Open Publication No. 363442/2002

### DISCLOSURE OF THE INVENTION

### PROBLEMS TO BE SOLVED BY THE INVENTION

In the case where titanium oxide is used for a coating composition, the resulting film has a refractive index of about 1.60 or more because the TiO₂ itself has a higher refractive index as compared with other inorganic oxides, and at the same time, there is a merit that a range of choice of a refractive index of the film is widened. However, because TiO₂ is extremely poor in weathering resistance, a film formed from a coating composition containing TiO₂ suffers decomposition of an organic component such as an organosilicon compound in the film, decomposition of an epoxy resin component used as a film-forming component and further deterioration of the film on the resin substrate surface side. That is to say, there is a problem of film durability. Moreover, this film has another problem of poor adhesion to a substrate.

On this account, an attempt to improve weathering resistance by using a composite of titanium oxide and cerium oxide has been made, as proposed in the patent documents 3 to 6, but the resulting film is still insufficient in the weathering resistance. Further, there is another problem that a cured film obtained from the composite sol is somewhat colored.

According to circumstances, coloring of such a hard coat layer or a primer layer has been carried out when needed. In case of the aforesaid conventional titanium-based composite particles, however, fading of the colored layer sometimes takes place by the action of titanium oxide, that is, fading resistance is sometimes lowered.

Then, in the patent document 10, the present applicant proposes use of titanium oxide-based fine particles having an antimony oxide coating layer. By the use of such fine particles, weathering resistance, adhesion and weathering fading resistance of the colored product are improved, and a hard coat film that is more excellent than the conventional ones is obtained. However, there is a problem that the hard coat film itself is discolored (yellowed) by ultraviolet rays.

By the way, an episulfide compound or the like has been proposed as a lens substrate, but as a high-refractive index lens, a polycarbonate lens is the main stream in U.S.A. from the viewpoint of safety. However, the hard coat or the transparent film having been heretofore proposed has a defect of poor adhesion to the polycarbonate substrate. On this account, formation of a primer film between the polycarbonate substrate and the transparent film has been carried out. In this case, however, there reside problems that the film formation takes a time and the cost becomes high though the adhesion is improved. Accordingly, development of a hard' coat or a transparent film having excellent adhesion to the polycarbonate substrate has been desired.

### MEANS TO SOLVE THE PROBLEMS

Under such circumstances as described above, studies have been earnestly made in order to solve the above problems, and as a result, it has been found that a transparent film, which can solve the above problems, exhibits high adhesion even to a polycarbonate substrate, has a high refractive index, has been improved in weathering resistance and weathering fading resistance, has excellent mar resistance, colorability and weathering resistance and is free from discoloration due to ultraviolet rays, can be obtained by using metal oxide fine particles each of which comprises a metal oxide core particle and a coating layer composed of antimony oxide and by using two kinds of specific curing agents in combination as curing agents for an organosilicon compound (film-forming component). Based on the finding, the present invention has been accomplished.
(1) That is to say, the transparent film-forming coating liquid of the present invention comprises the following components (A) to (D):
   (A) an organosilicon compound and/or a hydrolyzate of the organosilicon compound,
   (B) metal oxide fine particles each of which comprises a metal oxide core particle and a coating layer composed of antimony oxide,
   (C) a curing agent (curing agent (A)) consisting of a polythiol compound, and one or both of an organic polycarboxylic acid and an acetylacetone metal complex, and
   (D) a curing agent (curing agent B) comprising a compound containing basic nitrogen.
(2) The metal oxide fine particles (B) have been surface-modified with an organosilicon compound or an amine compound.
(3) At least a part of the organosilicon compound (A) is an epoxy group-containing organosilicon compound, and the content of the epoxy group-containing organosilicon compound in the whole of the organosilicon compound is not less than 60% by weight as a solids content.
(4) The antimony oxide to form the coating layer has an antimony oxidation number of 3 to 5.
(5) The proportion of the coating layer is in the range of 1 to 90% by weight in terms of Sb₂O₅.
(6) The metal oxide core particle contains antimony pentaoxide or titanium oxide as a main component.
(7) The metal oxide core particle contains titanium oxide as a main component and further contains an oxide of one or more elements selected from the group consisting of Si, Al, Sn, Zr, Fe, Sb, Nb, Ta and W in an amount of less than 10% by weight in terms of an oxide.
(8) Between the metal oxide core particle and the coating layer, one or more intermediate thin layers composed of an oxide of one or more elements selected from the group consisting of Si, Al, Sn, Zr, Sb, Nb, Ta and W are formed.
(9) The substrate with a transparent film of the present invention has, on a polycarbonate substrate surface, a transparent film formed by the use of the above-mentioned transparent film-forming coating liquid.
(10) The transparent film has a refractive index of not less than 1.54.
(11) The substrate with a transparent film has a primer film between the polycarbonate substrate and the transparent film.
(12) The substrate with a transparent film further has an antireflection film on the transparent film.

### EFFECT OF THE INVENTION

According to the preset invention, a transparent film, which has a high refractive index and a high transmittance, is free from interference fringe and is excellent in mar resistance, abrasion resistance, impact resistance, hot water resistance, sweat resistance chemical resistance, weathering resistance, light resistance and flexibility, can be formed with excellent adhesion on a surface of a substrate of plastic or the like, particularly a polycarbonate substrate on which it is difficult to form a film by the use of a conventional coating liquid. Moreover, the resulting transparent film has properties such that it can be improved in the colorability and suffers little discoloration due to ultraviolet rays.

The transparent film-forming coating liquid of the invention comprises metal oxide fine particles each of which comprises a metal oxide core particle and a coating layer composed of antimony oxide, a polythiol compound and one or both of an organic polycarboxylic acid and an acetylacetone metal complex as a curing agent [a], and a compound containing basic nitrogen as a curing agent [b]. Therefore, the curing catalytic action is amplified, and besides, discoloration of a guard coat film due to ultraviolet rays is inhibited though the reason is not clear. On this account, a transparent film excellent in weathering resistance, light resistance, chemical resistance, flexibility and colorability can be formed. When the metal oxide fine particles are surface-modified, the resulting film is excellent in adhesion to a substrate, particularly a polycarbonate substrate, and has a high surface hardness, so that the film exhibits excellent mar resistance and abrasion resistance, and even in the case where the film is colored if desired, discoloration or fading can be inhibited.

### BEST MODE FOR CARRYING OUT THE INVENTION

The transparent film-forming coating liquid of the invention is described in detail hereinafter.

### Transparent film-forming coating liquid

The transparent film-forming coating liquid of the invention comprises the following components (A) to (D):
(A) an organosilicon compound and/or a hydrolyzate of the organosilicon compound,
(B) metal oxide fine particles each of which comprises a metal oxide core particle and a coating layer composed of antimony oxide,
(C) a curing agent (curing agent (A)) consisting of a polythiol compound, and one or both of an organic polycarboxylic acid and an acetylacetone metal complex, and
(D) a curing agent (curing agent B) comprising a compound containing basic nitrogen.

### Organosilicon compound and/or hydrolyzate of the organosilicon compound

The organosilicon compound functions as a film-forming component of a transparent film and is not specifically restricted provided that it can be hydrolyzed to form a silica-based film and can be cured. Specifically, the below-described organosilicon compound or its hydrolyzate is employable.

As the organosilicon compound, an organosilicon compound represented by any one of the following formulas is employed.

R¹ₐR²_{b}Si(OR³)_{4-(a+b)}

R¹ₐR²_{b}SiX_{4-(a+b)}

In the above formulas, R¹ is an alkyl group of 1 to 6 carbon atoms or an alkyl group of 1 to 6 carbon atoms having an organic group selected from the group consisting of a vinyl group, an epoxy group, a methacryloxy group, a mercapto group and an amino group, R² is an alkyl group of 1 to 3 carbon atoms, an alkylene group, a cycloalkyl group, a halogenated alkyl group or an aryl group, R³ is an alkyl group of 1 to 4 carbon atoms, an alkylene group, a cycloalkyl group, an alkoxyalkyl group or an arylalkyl group, X is a halogen atom, a is 0 or 1, and b is 0, 1 or 2.

Examples of the organosilicon compounds represented by the above formulas include tetraethoxysilane, methyltrimethoxysilane, vinyltrimethoxysilane, γ-methacryloxypropyltrimethoxysilane, trimethylchlorosilane, α-glycidoxymethyltrimethoxysilane, α-glycidoxyethyltrimethoxysilane, β-glycidoxyethyltrimethoxysilahe, γ-glycidoxypropyltrimethoxysilane, γ-glycidoxypropyltriethoxysilane, γ-glycidoxypropylmethyldimethoxysilane, γ-glycidoxypropylmethyldiethoxysilane, P-(3,4-epoxycyclohexyl)-ethyltrimethoxysilane, β-(3,4-epoxycyclohexyl)-ethyltriethoxysilane, γ-aminopropyltrimethoxysilane, γ-aminopropyltriethoxysilane, N-β(aminoethyl)-γ-aminopropylmethyldimethoxysilane and N-β(aminoethyl)-γ-aminopropylmethyldiethoxysilane. These compounds can be used singly or in combination of two or more kinds.

The organosilicon compound may be a non-hydrolyzed compound or a hydrolyzate. Hydrolysis is desirably carried out without a solvent or in a polar organic solvent such as an alcohol in the presence of an acid. In the case where a hydrolyzate is used, after the organosilicon compound is hydrolyzed in advance, it may be mixed with the later-described metal oxide fine particles. However, after the metal oxide fine particles are mixed with the organosilicon compound, the organosilicon compound may be hydrolyzed. By treating the organosilicon compound in this manner, surface modification can be substantially carried out at the same time. Therefore, the production steps can be decreased, and the production efficiency becomes excellent.

In the present invention, it is preferable to use en epoxy group-containing organosilicon compound as the orgaosilicon compound, and in this case, in the whole of the organosilicon compound, the content of the epoxy group-containing organosilicon compound is preferably not less than 60% by weight as a solids content. Examples of the epoxy group-containing organosilicon compounds preferably used include γ-glycidoxypropyltrimethoxysilane, γ-glycidoxypropylmethyldiethoxysialne and β-(3,4-epoxycyclohexyl)-ethyltrimethoxysilane.

Such an epoxy group-containing organosilicon compound may be used singly or may be used in combination with another organosilicon compound. When it is used in combination, the content of the epoxy group-containing organosilicon compound is desirably set to not less than 60% by weight as a solids content in the total amount of the organosilicon compounds. By using the epoxy group-containing organosilicon compound in the above amount as a solids content, adhesion to a substrate and mar resistance can be enhanced.

In the transparent film, the organosilicon compound forms a film-forming component (also referred to as "matrix", "binder" or "vehicle"), and silanol formed by the hydrolysis is polycondensed. When the epoxy group is contained, the epoxy group undergoes ring-opening polymerization, so that a transparent film having excellent mar resistance, weathering resistance and weathering fading resistance can be formed.

### Metal oxide fine particles

Each of the metal oxide fine particles comprises a metal oxide core particle and a coating layer composed of antimony oxide. Although the average particle diameter of the metal oxide fine particles is not specifically restricted, it is desired to be in the range of 1 to 100 nm, preferably 2 to 60 nm.

When the average particle diameter is in the above range, the resulting transparent film has a high hardness and excellent mar resistance, and besides, a refractive index of the transparent film can be sufficiently increased.
If the average particle diameter is less than the lower limit of the above range, a transparent film obtained using a coating liquid containing such metal oxide fine particles has an insufficient hardness and exhibits poor mar resistance. Moreover, a refractive index of the transparent film cannot be sufficiently increased occasionally. If the average particle diameter exceeds the upper limit of the above range, the resulting film sometimes looks opaque because of light scattering.

### Metal oxide core particle

The core particle is not specifically restricted provided that it has a refractive index of 1.7 to 3.0 and the later-described coating layer of antimony oxide can be formed thereon. The core particle is desirably a particle containing antimony pentaoxide or titanium oxide as a main component.

The antimony pentaoxide core particle may be a particle composed of antimony pentaoxide or may be a particle containing another antimony oxide (having different antimony oxidation number).
The antimony pentaoxide core particle is easily coated with antimony oxide, and a refractive index of the resulting metal oxide fine particle is in a narrow range of about 1.6 to 1.7. A transparent film formed by the use of such fine particles has excellent colorability, and after coloring, fading due to ultraviolet rays can be inhibited.

The titanium oxide-based core particle may contain, in addition to titanium oxide or Ti, an oxide of one or more elements selected from Si, Al, Sn, Zr, Fe, Sb, Nb, Ta and W. When another oxide is contained, the titanium oxide content in the titanium oxide-based core particle is desired to be not less than 10% by weight, preferably not less than 20% by weight, in terms of TiO₂. When the titanium oxide content is in this range, a refractive index of the resulting film can be increased, and interference fringe is not formed.

The titanium oxide and a component other than titanium oxide may be present in the form of a mixture, in the state of a solid solution or in another composite form. The titanium oxide may be amorphous, or may be crystalline, such as anatase type, rutile type or brookite type. Further, it may be a provskite type titanium compound, such as barium titanate (BaTiO₃ or BaOTiO₂).

The titanium oxide-based core particle also containing a component other than titanium oxide is, for example, a composite core particle containing tin oxide. When this composite core particle is used, a transparent film of a high refractive index that is properly used for a high-refractive index lens substrate is obtained. The titanium oxide-based core particle may further contain silica or zirconia in addition to the tin oxide.

The average particle diameter of the core particles can be properly selected according to the particle diameters of the finally used metal oxide fine particles. However, it is desired to be in the range of 1 to 100 nm, preferably 2 to 50 nm.

### Antimony oxide coating layer

On the surface of the core particle, a coating layer composed of antimony oxide is formed.

Although the thickness of the antimony oxide coating layer is not specifically restricted and varies depending upon the particle diameter of the core particle, it is preferably in the range of 1/200 to 1/5 of the particle diameter of the core particle.
The coating layer has only to be formed so that the content of the antimony oxide for forming the coating layer in the metal oxide fine particle should become 1 to 90% by weight, preferably 5 to 70% by weight, in terms of Sb₂O₅. When the antimony oxide content is in this range, the particle diameters of the metal oxide fine particles are uniform, and a transparent film having high fading resistance can be formed. By providing such an antimony oxide coating layer, enhancement of weathering resistance becomes possible. Further, by virtue of the antimony oxide coating layer, an action inherent in the titanium oxide is inhibited, so that the fading resistance becomes excellent. Furthermore, by the thickness of the antimony oxide coating layer, the refractive index can be arbitrarily changed, and therefore, a transparent film free from interference fringe can be formed according to the refractive index of the substrate.

If the amount of the antimony oxide coating layer in the metal oxide fine particle is less than the lower limit of the above range, the fading resistance sometimes becomes insufficient. If the amount of the antimony oxide coating layer exceeds the upper limit of the above range, the resulting metal oxide fine particles sometimes have ununiform particle diameters, or they are sometimes aggregated, so that the transparency of the resulting transparent film is sometimes lowered.

The antimony oxide to form the coating layer is not restricted to "Sb₂O₅" and usually means Sb₂O₃ to Sb₂O₅, namely, an oxide having an antimony oxidation number of 3 to 5. If the core particle has such an antimony oxide coating layer thereon and if a dye is incorporated into the resulting transparent film, fading resistance of the transparent film is more enhanced as compared with the case of the core particle only.

A preferred antimony oxide is an oxide having an antimony oxidation number of less than 5. When the antimony oxidation number is less than 5, fading resistance of a colored product becomes more excellent.
In the present invention, the antimony oxide may be amorphous or crystalline, and may contain water of hydration or water of crystallization.

### Intermediate thin layer

In the metal oxide fine particle of the invention, one or more intermediate thin layers composed of at least one of an oxide of one or more elements selected from Si, Al, Sn, Zr, Zn, Sb, Nb, Ta and W, a composite oxide thereof and a mixture of the oxide and the composite oxide may be formed between the core particle and the antimony oxide coating layer. The intermediate thin layer may have a single layer structure or a multilayer structure of two or more layers.

By forming at least one intermediate thin layer between the core particle and the antimony oxide coating layer, a refractive index of the metal oxide fine particle can be controlled. Moreover, light resistance and weathering resistance (e.g., resistance to film deterioration due to decomposition of vehicle component caused by activity of titanium oxide-based core particle) of the resulting transparent film and adhesion between the transparent film and the substrate can be enhanced. Furthermore, the fine particles can be prevented from coloring or can be made colorless, and therefore, the transparency of the transparent film can be enhanced.

At least one intermediate thin layer is formed, and the number of the intermediate thin layers and the thickness thereof are not specifically restricted provided that at least one intermediate layer is formed in such a manner that the proportion of the core particle to the metal oxide fine particle is in the range of 10 to 99% by weight and the proportion of the antimony oxide coating layer to the metal oxide fine particle is in the range of 1 to 90% by weight in terms of Sb₂O₅.

For the intermediate thin layer, a composite oxide composed of silicon oxide and zirconium oxide and/or aluminum oxide is particularly preferable, and as its composite form, for example, silicon oxide, zirconium oxide and aluminum oxide may be each laminated to form a laminate of thin layers, or silica-zirconia, silica-alumina or silica-zirconia-alumina may form a thin layer. When such an intermediate thin layer is formed, metal oxide fine particles capable of forming a transparent film that is excellent in weathering resistance, light resistance, adhesion to a substrate, film hardness and mar resistance can be obtained.

Further, by the use of silicon oxide in the intermediate thin layer, stability of a metal oxide fine particle dispersion is enhanced, and a coating liquid using this dispersion has a long pot life. Furthermore, hardness of a transparent film obtained by applying a coating liquid containing such metal oxide fine particles can be enhanced, and adhesion of an antireflection film formed on the transparent film can be enhanced. As a result, weathering resistance, light resistance, adhesion to a substrate, film hardness, mar resistance, etc. are enhanced also in this case.

A process for preparing the metal oxide fine particles is not specifically restricted provided that the above-described metal oxide fine particles can be obtained, and hitherto known processes are adoptable. Of these, a process for preparing titanium oxide-containing composite oxide particles coated with antimony oxide, which is disclosed in Japanese Patent Laid-Open Publication No. 363442/2002 applied by the present applicant, can be preferably adopted.

As the titanium oxide-based core particle, a composite oxide particle disclosed in, for example, Japanese Patent Laid-Open Publication No. 48940/1996 applied by the present applicant is preferably employed. For example, a method of hydrolyzing a peroxotitanic acid aqueous solution and a method of hydrolyzing a titanium alkoxide or a titanium salt are employable. Of these, use of peroxotitanic acid (titanium peroxide) is desirable from the viewpoint of control of particle diameter and crystallizability

As the antimony pentaoxide core particle, an antimony pentaoxide core particle disclosed in, for example, Japanese Patent Laid-Open Publication No. 180717/1990 applied by the present applicant is preferably employed. For example, an antimony oxide sol obtained by dissolving antimony oxide, an oxidizing agent and an alkali and then allowing them to react with one another is preferably employed.

In the case where an intermediate thin layer is formed, the intermediate thin layer has only to be formed in the same manner as that for forming the coating layer on the core particle.
For forming the antimony oxide coating layer, a water dispersion of core particles or core particles each of which has an intermediate thin layer is prepared first. This dispersion desirably has a solids concentration of 0.01 to 40% by weight, preferably 0.1 to 30% by weight. When the solids concentration is in this range, a coating layer can be efficiently formed, and besides, the dispersion has high dispersing qualities.

Subsequently, to the dispersion is added an antimony compound. The antimony compound is added in such an amount that the proportion of the antimony oxide coating layer to the finally obtained metal oxide fine particle becomes 1 to 90% by weight in terms of Sb₂O₅.

The antimony compound for use in the invention is not specifically restricted, and antimony inorganic acid salts such as antimony chloride, organic acid salts such as potassium antimonyl tartrate, alkalimetal antimonates such as sodium antimonate and potassium antimonate, antimony alkoxides, etc. are employable

A solution obtained by dissolving the antimony compound in water and/or an organic solvent is added to the water dispersion of core particles or core particles having a coating layer, with properly controlling pH or temperature of the solution when needed, and then, an oxidizing agent is added, whereby a coating layer can be formed. After the core particles and the antimony compound are mixed, the mixture may be aged. Further, the oxidizing agent may be added to the antimony compound and reacted in advance. Furthermore, an antimony compound containing an oxidizing agent may be employed.

By coating the core particle in the above manner, the antimony compound is oxidized, and a coating layer composed of antimony oxide is formed. The resulting particles may be cleaned to remove unnecessary substances, when needed.
The oxidizing agent is not specifically restricted provided that the antimony oxidation number of 3 to 5 can be maintained, and specifically, oxygen, ozone, hydrogen peroxide, hydrochlorous acid or the like is employable. For the cleaning, an ultrafiltration membrane method, a deionization method using an ion-exchange resin, etc. are employable.

### Surface modification treatment

The metal oxide fine particles for use in the invention are preferably those whose surfaces have been modified by treating them with an organosilicon compound or an amine-based compound. By the modification treatment, the dispersed state of the metal oxide fine particles in the transparent film-forming coating liquid becomes stable over a long period of time.

Further, the metal oxide fine particles having been surface-modified exhibit low reactivity to the matrix (organosilicon compound and/or its hydrolyzate) and have high affinity for the matrix. Therefore, as compared with the particles which have not been surface-modified, the resulting transparent film has higher hardness. Moreover, the film has high affinity for a substrate, exhibits excellent adhesion particularly to a polycarbonate substrate on which it is difficult to form a film of high adhesion by the use of a conventional coating liquid, and is excellent in mar resistance, flexibility and colorability.

As the organosilicon compound for use in the surface modification treatment, an organosilicon compound publicly known as a silane coupling agent is employable, and the type of the organosilicon compound is properly selected according to the use application, the type of a solvent, etc. Specifically, there can be used the following compounds:
monofunctional silane represented by the formula R₃SiX,
bifunctional silane represented by the formula R₂SiX₂,
trifunctional silane represented by the formula RSiX₃, and
tetrafunctional silane represented by the formula SiX₄.

In the above formulas, R is an alkyl group, a phenyl group, a vinyl group, a methacryloxy group, a mercapto group, an amino group or an alkyl group having an epoxy group, and X is a hydrolyzable group (alkoxy group, halogen or hydrogen).

Specific examples of such compounds include monofunctional silanes, such as trimethylsilane, dimethylphenylsilane and dimethylvinylsilane; bifunctional silanes, such as dimethylsilane and diphenylsilane; trifunctional silanes, such as methylsilane and phenylsilane; and tetrafunctional silanes, such as tetraethoxysilane. The surface modification treatment may be carried out before or after the hydrolyzable group is hydrolyzed. After the surface modification, it is preferable that the hydrolyzable groups have already reacted with the -OH groups present on the fine particle surfaces, but even if a part of them remains unreacted, there is no problem.

The organosilicon compound may be the same as (A) the organosilicon compound or its hydrolyzate previously described as the film-forming component. By the use of the same compound, the compound exhibits high affinity in the transparent film-forming coating liquid, and a more stable coating liquid can be obtained.

Examples of the amine-based compounds include ammonium; alkylamines, such as ethylamine, triethylamine, isopropylamine and n-propylamine; aralkylamines, such as benzylamine; alicyclic amines, such as piperidine; alkanolamines, such as monoethanolamine and triethanolamine; and quaternary ammonium salts and quaternary ammonium hydroxides, such as tetramethylammonium salt and tetramethylammonium hydroxide.

For modifying the surfaces of the metal oxide fine particles with the organosilicon compound or the amine-based compound, it is preferable that the metal oxide fine particles are mixed with an alcohol solution of the above compound, then a given amount of water and if necessary a catalyst were added, and the resulting mixture is allowed to stand for a given period of time at ordinary temperature or is subjected to heat treatment.

Also by adding a hydrolyzate of the above compound and the metal oxide fine particles to a mixed solution of water and an alcohol and then performing heat treatment, the surfaces of the metal oxide fine particles can be modified with the compound.

The metal oxide fine particles prepared as above are usually obtained in the form of a dispersion in which these fine particles are dispersed in a solvent. Examples of the solvents include the later-described solvents.
In the addition of the metal oxide fine particles to the coating liquid, they may be added as a powder that is obtained by solid-liquid separation from the dispersion and drying. However, the dispersion itself may be added. If necessary, the dispersion may be subjected to solvent replacement.

### Curing agent [a]

As the curing agent [a] for use in the transparent film-forming coating liquid of the invention, a polythiol compound, and one or both of an organic polycarboxylic acid and an acetylacetone metal complex are employable. Each of these compounds functions as a ring-opening polymerization curing agent for an epoxy group and/or a condensation catalyst for a silanol group

### Polythiol compound

The polythiol compound for use in the invention is not specifically restricted provided that it has two or more thiol groups in one molecule. Examples of such polythiol compounds include thiol compounds having 2 thiol groups in a molecule which are obtained by the esterification reaction of polyols such as ethylene glycol dithioglycolate with mercapto organic acids, thiol compounds having 3 or more thiol groups in a molecule which are obtained by the esterification reaction of polyols such as trimethylopropane tris(thioglycolate) and pentaerythritol tetrakis(thioglycolate) with mercapto organic acids, terminal thiol group-containing thiol compounds obtained by the reaction of epoxy compounds with hydrogen sulfide, and alkylpolythiol compounds, such as 1,4-butanedithiol, 1,6-hexanedithiol and 1,10-decanedithiol.

Of these, preferable are thiol compounds obtained by the esterification reaction of polyols with mercapto organic acids, and particularly preferable are thiol compounds having 3 or more thiol groups in a molecule

In the case where an alkali metal compound (basic substance) is used as a catalyst in the synthesis of the polythiol compound, dealkalization of a purified polythiol compound is desirably carried out to reduce the alkali metal ion concentration to not more than 50 ppm, particularly not more than 10 ppm.

If the alkali metal concentration of the polythiol compound is high, viscosity of the resulting coating liquid sometimes becomes high.

### Organic polycarboxylic acid

Examples of the organic polycarboxylic acids for use in the invention include maleic acid, phthalic acid, fumaric acid, adipic acid, itaconic acid, malic acid, hexahydrophthalic acid, tetrahydrophthalic acid, HET acid, maleic anhydride, phthalic anhydride, fumaric anhydride, adipic anhydride, malic anhydride, Nadic anhydride, trimellitic anhydride, pyromellitic anhydride, hexahydrophathalic anhydride, tetrahydrophthalic anhydride, methyltetrahydrophthalic anhydride, methylhexahydrophthalic anhydride and benzophenonetetracarboxylic anhydride.

Of these, adipic acid, itaconic acid, HET acid, phthalic anhydride, trimellitic anhydride or pyromellitic anhydride is preferably adoptable as a condensation catalyst for a compound having a silanol group or a curing agent for a compound having an epoxy group.

### Acetylacetone metal complex

As the acetylacetone metal complex for use in the invention, a compound represented by the following formula is employable.

M(CH₂COCH₂COCH₃)ₙ

wherein M is an element selected from Al(III), Cr(III), Co(III), Cu (II) and Fe(III).

Specific examples of such compounds include acetylacetone metal complexes, such as aluminum acetylacetonate, chromium acetylacetonate, titanyl acetylacetonate and cobalt acetylacetonate. Of these, an acetylacetone metal complex of Al(III) or Fe(III) is preferably employable. These acetylacetone metal complexes are useful as condensation catalysts for a compound having a silanol group or useful for curing an organosilicon compound having an epoxy group and/or a hydrolyzate of the organosilicon compound.

### Curing agent [b]

The curing agent [b] for use in the transparent film-forming coating liquid comprises a compound containing basic nitrogen.

Examples of the basic nitrogen-containing compounds include amine compounds having a tertiary amino group in a molecule, hydrazide compounds and amide compounds. These compounds themselves function as curing agents, and moreover, they can accelerate curing reaction when they are used in combination with the aforesaid curing agent [a]. When they are used in combination with the curing agent [a], a reaction of a silanol group of a compound having a silanol group or a hydrolyzate of an organosilicon compound and a reaction of an epoxy group of an organisilicon compound having an epoxy group can be accelerated with good balance though the reason is not clear. Therefore, a transparent film having more excellent weathering resistance, adhesion and mar resistance than the conventional ones is obtained. Furthermore, a problem of discoloration (yellowing) of a film due to ultraviolet rays is solved, and a transparent film having excellent transparency can be formed with excellent adhesion even to a substrate of polycarbonate or the like on which it is difficult to form a transparent film by the use of a conventional coating liquid.

Examples of the amine compounds include primary amines or secondary amines having a tertiary amino group in a molecule, specifically, amine compounds, such as dimethylaminopropylamine, diethylaminopropylamine, di-n-propylaminopropylamine, dibutylaminopropylamine, dimethylaminoethylamine and diethylaminoethylamine-n-methypiperazine, and imidazole compounds, such as 2-methylimidazole, 2-ethylimidazole, 2-ethyl-4-methylimidazole and 2-phenylimidazole; and alcohols, phenols and carboxylic acids having a tertiary amino group in a molecule, such as 2-dimethylaminoethanol, 1-methyl-2-dimethylaminoethanol, 1-phenoxymethyl-2-dimethylaminoethanol, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimixazole, 1-(2-hydroxy-3-phenoxypropyl)-2-phenylimidazoline, 1-(2-hydroxy-3-butoxypropyl)-2-methylimidazoline, 2-(dimethylaminomethyl)phenol, 2,4,6-tris(dimethylaminomethyl)phenol, N-n-dimethylaminobenzoic acid, isonicotinic acid and picolinic acid.

Of these, primary amines or secondary amines are preferably adoptable.
Examples of the hydrazide compounds and the amide compounds include carboxylic acid dihydrazides, such as adipic acid dihydrazide, dodecanoic acid dihydrazide, isophthalic acid dihydrazide and p-oxybenzoic acid dihydrazide, and dicyandiamide. Of these, adipic acid dihydrazide and dicyandiamide are preferably adoptable.

### Solvent

In the coating liquid of the invention, a solvent is used for the purposes of imparting fluidity to the coating liquid, controlling a solids concentration of the coating liquid and controlling surface tension, viscosity, evaporation speed, etc. of the coating liquid. As the solvent, water or an organic solvent is employed. Examples of the organic solvents employable in the invention include alcohols, such as methyl alcohol, ethyl alcohol and isopropyl alcohol; cellosolves, such as methyl cellosolve and ethyl cellosolve; glycols, such as ethylene glycol; esters, such as methyl acetate and ethyl acetate; ketones, such as acetone and methyl ethyl ketone; ethers, such as diethyl ether and tetrahydrofuran; aromatic hydrocarbons, such as toluene and xylene; carboxylic acids; and N,N-dimethylformamide.
These organic solvents may be used as a mixture of two or more kinds.

### Composition of coating liquid

The transparent film-forming coating liquid of the invention is obtained by mixing the aforesaid components (A), (B), (C) and (D), and if necessary, other components.

The solids concentration of the transparent film-forming coating liquid is desired to be in the range of 1 to 70% by weight, preferably 5 to 50% by weight, as a total concentration including a solids content derived from other components that are used when needed.

As a content of (A) the organosilicon compound and/or a hydrolyzate of the organosilicon compound in the coating liquid, a content thereof in the resulting transparent film (in other words, content in the whole solids content) is desired to be in the range of 20 to 70% by weight, preferably 30 to 60% by weight, as a solids content (in terms of silica). When the content of the component (A) is in this range, a film exhibiting high adhesion to a substrate or an antireflection film and having excellent mar resistance can be obtained. If the content of the component (A) is low, adhesion to a substrate or an antireflection film is lowered. If the content thereof is high, mar resistance becomes insufficient, and the film is liable to be marred.

As a content of (B) the metal oxide fine particles in the coating liquid, a content thereof in the resulting transparent film (in other words, content in the whole solids content) is desired to be in the range of 20 to 80% by weight, preferably 30 to 70% by weight, as a solids content (in terms of oxide). When the content of the component (B) is in this range, there can be obtained a transparent film which has high mar resistance and is almost free from occurrence of interference fringe because it becomes possible to change a refractive index according to the refractive index of the substrate.

If the content of the metal oxide fine particles is low, mar resistance sometimes becomes insufficient, and interference fringe cannot be inhibited occasionally because the refractive index cannot be raised to the same level as that of the substrate.
The refractive index of the transparent film can be controlled by changing the quantity ratio between the organosilicon compound (A) and the metal oxide fine particles (B), changing the thickness of the antimony oxide coating layer for forming the metal oxide fine particle (B), or changing the thickness of the intermediate layer or the type of the oxide. For example, if the amount of the metal oxide fine particles is increased, the refractive index is raised. If the thickness of the antimony oxide coating layer is increased or if an intermediate layer having a high refractive index is used, the refractive index can be raised.

If the content of the metal oxide fine particles in the transparent film is too high, adhesion to a substrate or an antireflection film is sometimes lowered. Moreover, whitening or cracking of the film sometimes takes place, and as a result, a problem of appearance occurs or film strength is lowered occasionally.

The amount of the polythiol compound used as the curing agent [a] in the transparent film-forming coating liquid is desired to be in the range of 0.01 to 0.2 part by weight, preferably 0.01 to 0.1 part by weight, based on 1 part by weight (solids content) of (A) the organosilicon compound and/or a hydrolyzate of the organosilicon compound. When the amount of the polythiol compound is in this range, the film can be sufficiently cured, and the adhesion to a substrate can be enhanced. If the amount of the polythiol compound is small, curing is insufficiently made because of small catalytic amount, and the adhesion to a substrate becomes insufficient. If the amount thereof is large, the working atmosphere sometimes becomes unfavorable because of strong odor.

The amount of the organic polycarboxylic acid used as the curing agent [a] in the transparent film-forming coating liquid is desired to be in the range of 0.03 to 0.4 part by weight, preferably 0.1 to 0.3 part by weight, based on 1 part by weight (solids content) of (A) the organosilicon compound and/or a hydrolyzate of the organosilicon compound. When the amount of the organic polycarboxylic acid is in this range, the film can be sufficiently cured, and the adhesion to a substrate can be enhanced. If the amount of the organic polycarboxylic acid is small, the action of the acid as a condensation catalyst or a curing catalyst becomes insufficient; and a film having sufficient mar resistance and hot water resistance is not obtained occasionally. If the amount of the organic polycarboxylic acid is large, a pot life is shortened, and the organic polycarboxylic acid is sometimes deposited in the curing process to cause bad appearance depending upon the type of the organic polycarboxylic acid.

The amount of the acetylacetone metal complex used as the curing agent [a] in the transparent film-forming coating liquid is desired to be in the range of 0.005 to 0.07 part by weight, preferably 0.01 to 0.05 part by weight, based on 1 part by weight (solids content) of (A) the organosilicon compound and/or a hydrolyzate of the organosilicon compound. When the amount of the acetylacetone metal complex is in this range, the film can be sufficiently cured, and the adhesion to a substrate can be enhanced. If the amount of the acetylacetone metal complex is small, the action of the acid as a condensation catalyst or a curing catalyst becomes insufficient, and a film having sufficient mar resistance and hot water resistance is not obtained occasionally. If the amount of the acetylacetone metal complex is large, the resulting transparent film (cured product) is sometimes colored depending upon the type of the acetylacetone metal complex.

The amount of the basic nitrogen-containing compound used as the curing agent [b] is desired to be in the range of 0.001 to 0.1 part by weight, preferably 0.002 to 0.08 part by weight, based on 1 part by weight (solids content) of (A) the organosilicon compound and/or a hydrolyzate of the organosilicon compound. When the amount of the basic nitrogen-containing compound is in this range, the film can be sufficiently cured, the adhesion of the film to a substrate is high, and control of discoloration of the transparent film due to ultraviolet rays becomes possible. If the amount of the basic nitrogen-containing compound is small, adhesion of the resulting transparent film to a substrate is lowered, and discoloration of the transparent film due to ultraviolet rays cannot be controlled occasionally. If the amount of the basic nitrogen-containing compound is large, the total amount of ions is increased, so that the stability of the coating liquid is lowered to thereby bring about shortening of a pot life, and depending upon circumstances, the transparent film-forming coating liquid sometimes gels.

For preparing the transparent film-forming coating liquid of the invention, the aforesaid components are dissolved or dispersed in a solvent, and the coating liquid can be used after diluted with a diluent solvent when needed.
Examples of the doluent solvents employable in the invention include alcohols, ketones, esters, ethers and cellosolves. In the case where the transparent film is intended to be imparted with colorability or higher adhesion, addition of a polyhydric alcohol or an epoxy resin is possible.

In order to further improve coating properties of the coating liquid or performance of the transparent film, it is also useful to add a silicon-based or fluorine-based surface active agent, an antistatic agent, an ultraviolet light absorber, etc. when needed.
The coating method with the coating liquid is selected from publicly known methods such as dipping and spin coating. Curing is carried out by heating and is desirably carried out under the curing conditions of 50 to 150°C, preferably 80 to 130°C, and 0.5 to 5 hours. It is desirable to control the transparent film-forming conditions so that the film thickness after curing of the transparent film-forming coating liquid should become 0.5 to 10 µm, preferably 1.0 to 5.0 µm. If the thickness of the transparent film is small, sufficient mar resistance is not obtained occasionally. If the thickness of the transparent film is large, surface smoothness of the film is sometimes lowered, or a problem of cracking sometimes takes place.

### Substrate with transparent film

The substrate with a transparent film of the invention has, on a substrate surface, a transparent film (sometimes referred to as a "hard coat film" hereinafter) formed by the use of the above-mentioned transparent film-forming coating liquid.

Examples of the substrates for use in the invention include various substrates made of plastics, such as polycarbonate, polthiourethane and aliphatic allyl carbonate. These substrates are used for various optical lenses such as spectacle lenses and camera lenses, various display device filters, looking glasses, window glasses, coating films of automobiles or the like, light covers used for automobiles, etc. The refractive indexes of these substrates are usually in the range of 1.55 to 1.74.

The refractive index of the transparent film formed on such a transparent substrate surface is preferably not less than 1.55. When the refractive index of the transparent film is not less than 1.55, interference fringe can be inhibited because a difference in refractive index between the film and the substrate is small.

In order to inhibit interference fringe, the refractive index difference is desired to be not more than 0.03, preferably not more than 0.01.
The thickness of the transparent film is preferably in the range of 0.5 to 10 µm though it varies depending upon the use application of the substrate with a transparent film.

The substrate with a transparent film of the invention can be produced by coating the aforesaid substrate surface with the coating solution of the invention by a hitherto known method, such as dipping, spinner method, spraying, roll coater method or flow method, then drying the coating layer to form a transparent film and then heating the transparent film formed on the substrate surface to a temperature of not higher than the heat-resistant temperature of the substrate. Of the above methods, the spinner method wherein a lens substrate does not need to be fixed by a clamp is preferable particularly for a lens substrate having a heat distortion temperature of lower than 100°C. In the case where the substrate is a resin lens, after application of the coating solution onto the substrate, the resulting coating layer may be dried by heating at a temperature of 40 to 200°C for several hours.

In the production of the substrate with a transparent film of the invention, the substrate surface may be previously treated with an alkali, an acid or a surface active agent, or subjected to abrasion with inorganic or organic fine particles, or subjected to primer treatment or plasma treatment, for the purpose of improving adhesion between the substrate, such as a lens substrate, and the transparent film.

### Synthetic resin lens

In the case where the substrate is a synthetic resin lens, this resin lens substrate with a transparent film is a typical example of the substrate with a transparent film of the invention, and is characterized by having, on a surface of the resin lens substrate, a transparent film formed from the transparent film-forming coating liquid.

The transparent film formed from the coating liquid of the invention can be widely applied to thin synthetic resin lenses composed of high-refractive index resin materials.
Specifically, the transparent film can be applied to high-refractive index lenses having a refractive index of not less than 1.54, and is preferably applied particularly to a polycarbonate lens.

Even if the polycarbonate lens is provided with a transparent thin film using a conventional coating liquid, the thin film exhibits low adhesion and thereby has low strength, so that the film immediately peels off or is marred occasionally. On the other hand, when the coating liquid of the invention is used, a reaction of a silanol group of a compound having a silanol group or a hydrolyzate of an organosilicon compound and a reaction of an epoxy group of an organisilicon compound having an epoxy group can be accelerated with good balance though the reason is not clear. Therefore, a transparent film having more excellent weathering resistance, adhesion and mar resistance than the conventional ones is obtained. In the conventional process, a primer film is generally formed, but if the coating liquid of the invention is used, a primer film does not necessarily have to be formed. For the purpose of preventing reflection, two or more transparent films of different refractive indexes can be formed, and the refractive index of the transparent film can be controlled by changing the quantity ratio between the organosilicon compound (A) and the metal oxide fine particles (B), or changing the thickness of the antimony oxide coating layer that constitutes the metal oxide fine particle (B), or changing the thickness of the intermediate layer or the type of the oxide. Further, plural transparent films may be laminated so as to gradually reduce a difference in refractive index between the lens substrate and the transparent film, and this is more effective for solving the problem of interference fringe.

The coating liquid of the invention is also preferably used for other lens substrates than polycarbonate lens substrate, such as a sulfur-containing urethane-based lens substrate, a (meth)acrylic-based lens substrate, an episulfide-based lens substrate and a lens substrate obtained from an episulfide compound, because they have high-refractive index and is excellent in transparency, colorability, heat resistance, flexural strength, impact resistance, weathering resistance, light resistance, flexibility, processability and the like.

By providing a single-layer or multilayer antireflection film composed of an inorganic substance on the transparent film, reduction of reflection and enhancement of transmittance can be achieved, and a function of spectacle lenses can be further enhanced. The antireflection film can be formed by a thin film-forming method such as vacuum deposition using SiO, SiO₂, Si₃N₄, TiO₂, ZrO₂, Al₂O₃, MgF₂, Ta₂O₅, CaF₂ or the like as the inorganic substance. The antireflection film can be formed also by preparing a coating solution containing the above component and performing wet process using the coating solution.

In the present invention, a primer film may be provided between the lens substrate and the transparent film (hard coat film). When the primer film is provided, colorablity can be improved, and ununiform coloring can be prevented. The primer film can be formed by the use of a film-forming coating liquid containing a coating resin that is hitherto known as a matrix, preferably a polyester resin or a urethane resin.

According to the present invention, specific metal oxide fine particles are contained in the transparent film, so that even if the transparent film is colored, the film is free from discoloration or fading. That is to say, thin synthetic resin lenses having excellent fading resistance can be obtained, and such lenses are preferable as, for example, colored lenses or sunglasses.

### EXAMPLES

The present invention is further described with reference to the following examples, but it should be construed that the invention is in no way limited to those examples.

### Example 1

### Preparation of titanium-based core particle (TN-1) dispersion sol

With stirring 250 kg of a titanium sulfate aqueous solution having a concentration of 0.4% by weight in terms of TiO₂, aqueous ammonia having a concentration of 15% by weight was slowly added to the solution to hydrolyze titanium sulfate, whereby a white slurry having pH of 8.5 was obtained. This slurry was filtered and then cleaned to obtain 11.11 kg of a cake of a hydrous titanic acid gel having a solids concentration of 9% by weight.

To 5.55 kg of the cake, 6.06 kg of hydrogen peroxide water having a concentration of 33% by weight and 13.4 kg of water were added, and they were heated at 80°C for 5 hours to obtain 25 kg of a peroxotitanic acid aqueous solution having a concentration of 2.0% by weight in terms of TiO₂. This peroxotitanic acid aqueous solution was yellowish brown transparent and had pH of 8.1.

With 750 g of a silica sol having an average particle diameter of 7 nm and having a SiO₂ concentration of 15% by weight, 22.5 kg of the above-obtained peroxotitanic acid aqueous solution and 27.25 kg of pure water were mixed, and the mixture was heated in an autoclave at 200°C for 96 hours. After heating, the resulting colloidal solution was concentrated to obtain a titanium-based core particle (TN-1) dispersion sol having a solids concentration of 10% by weight.

### Formation of intermediate thin layer

To a zirconium oxychloride aqueous solution obtained by dissolving 5.26 kg of zirconium oxychloride in 9.474 kg of water and having a ZrO₂ concentration of 2% by weight, aqueous ammonia having a concentration of 15% by weight was added to hydrolyze zirconium oxychloride, whereby a slurry having pH of 8.5 was obtained. This slurry was filtered and cleaned to obtain a cake having a solids concentration of 10% by weight in terms of ZrO₂.

To 1.22 kg of the cake, 3.08 kg of water was added, and a KOH aqueous solution was further added to make the mixture alkaline. Then, 9.0 kg of hydrogen peroxide was added, and the mixture was heated to perform dissolution, whereby 6.1 kg of a hydrogen peroxide solution of zirconium having a concentration of 2% by weight in terms of ZrO₂ was obtained.

Separately, commercially available water glass was diluted with water and then dealkalized by a cation-exchange resin to prepare 18.9 kg of a silicic acid solution having a SiO₂ concentration of 2% by weight.
To 5 kg of the titanium-based core particle (TN-1) dispersion sol, 20 kg of water was added to give a mixture having a solids concentration of 2% by weight, then the mixture was heated to 90°C, and to the mixture were added 1.525 kg of the hydrogen peroxide solution of zirconium and 4.725 kg of the silicic acid solution.

Subsequently, the resulting mixed liquid was subjected to heat treatment at 200°C for 18 hours in an autoclave and then concentrated by an ultrafiltration membrane method to obtain a light milky white water dispersion sol (solids concentration: 10% by weight) of titanium-based core particles (TN-1) each of which had a transparent intermediate thin layer composed of silicon oxide and zirconium oxide. The sol had an average particle diameter of 9.0 nm.

### Formation of antimony oxide coating layer

In an aqueous solution obtained by dissolving 285 g of caustic potash (available from Asahi Glass Co., Ltd., purity: 85% by weight) in 9000 g of water, 555 g of antimony trioxide (available from Nihon Seiko Co., Ltd., ATOX-R, purity: 99% by weight) was suspended. The suspension was heated to 100°C, and to the suspension, an aqueous solution obtained by diluting an oxidizing agent (146.5 g of hydrogen peroxide water having a concentration of 35% by weight) with 1100 g of water was added over a period of 14 hours to prepare an antimonic acid compound aqueous solution.

To 5 kg of the water dispersion sol of titanium-based core particles (TN-1) each of which had an intermediate thin layer, 20 kg of water was added so that the solids concentration should become 2% by weight. To the sol was added an antimonic acid compound aqueous solution having a concentration of 2% by weight in terms of Sb₂O₅, which had been obtained by adding 15.91 kg of water to 9.09 kg of the above-obtained antimonic acid compound aqueous solution. Then, deionization with an ion-exchange resin was carried out, and coating of the core particles with the antimonic acid compound was carried out.

Subsequently, water was added so that the solids concentration should become 1% by weight, and then heat treatment was carried out in an autoclave at 98°C for 18 hours (by virtue of the oxidizing agent, the antimonic acid compound is oxidized, and an antimony oxide coating layer is formed). The resulting colloidal solution was concentrated to obtain an antimony oxide coated titanium-based composite oxide particle (AT-1) dispersion aqueous sol having a solids concentration of 10% by weight.

The antimony oxide coated titanium-based composite oxide particles (AT-1) had an average particle diameter of 9.1 nm.
The water as a dispersion medium for the antimony oxide coated titanium-based composite oxide particles (AT-1) was replaced with methanol, and the resulting sol was concentrated until the solids concentration became 20% by weight, whereby an organosol of the antimony oxide coated titanium-based composite oxide particles (AT-1) was prepared.

### Surface modification treatment

In a reaction vessel, 1000 g of the organosol of the antimony oxide coated titanium-based composite oxide particles (AT-1) was placed, and with stirring the organosol, 56 g of methyltrimethoxysilane and 20 g of water were added to the organosol, followed by heating to 50°C. Subsequently, the resulting mixture was concentrated to prepare an organosol of antimony oxide coated titanium-based composite oxide particles (ST-1) having been surface-modified.

A refractive index of the particle was determined in the following manner. A refractive index of a water dispersion sol of the particles was measured by a refractometer (manufactured by Atago Co., Ltd., RX-5000α). Separately, specific gravity of the sol was measured, and the refractive index of the particle was calculated.

### Preparation of transparent film-forming coating liquid (FS-1)

In a flask equipped with a stirring device, 110.5 g of γ-glycidoxypropyltrimethoxysilane, 11.3 g of tetramethoxysilane and 30.1 g of methyl alcohol were placed in order, then 39.19 g of 0.05N hydrochloric acid water was added, and they were stirred for 30 minutes. Subsequently, 0.4 g of a silicone-based surface active agent (available from Nippon Unicar Co., Ltd., L-7001) was added, and aging was carried out at 5°C for 24 hours to prepare a liquid containing a matrix-forming component.

To the liquid containing a matrix-forming component, 280 g of the organosol of the antimony oxide coated titanium-based composite oxide particles (ST-1) was added, then 2 g of a polythiol compound (available from Toray Fine Chemicals Co., Ltd., "Polythiol QE-340M") as a curing agent [a], 15 g of pyromellitic anhydride as a curing agent [a], and 2 g of 2-ethyl-4-methylimidazole as a curing agent [b] were added, and they were sufficiently stirred. Thereafter, aging was carried out at 0°C for 48 hours to prepare a transparent film-forming coating liquid (FS-1).

### Preparation of substrate with transparent film (PL-1)

A commercially available polycarbonate plate (available from Mitsubishi Engineering-Plastics Corporation, Upiron Sheet, refractive index: 1.59) was cleaned. Thereafter, the polycarbonate plate was coated with the transparent film-forming coating liquid (FS-1) by dipping (pull-up rate: 160 mm/min), and the coating layer was air dried for 1 minute and cured by heating at 120°C for 2 hours to prepare a substrate with a transparent film (PL-1-1).

The substrate with a transparent film (PL-1-1) was.set in a vacuum deposition apparatus, and a vacuum chamber was evacuated to a pressure of 1.33×10⁻³ with heating the chamber at 60°C, followed by oxygen ion cleaning. Thereafter, using Optron SiO₂M1 as a silica source and Optron ZrO₂G as a zirconia source, a silica-zircona layer (thickness: 1/4 λ, λ: 520 nm) was formed first, then a zirconia layer (thickness: 1/2 λ) was formed, and then a silica layer (thickness: 1/4 λ) was formed to prepare an antireflection film on the transparent film. Thus, a substrate with a transparent film (PL-1) was prepared.

The resulting substrate with a transparent film (PL-1) was evaluated on the following properties. The results are set forth in Table 1.

### (1) Appearance

In a place with a black background, a fluorescent lamp (available from Toshiba Lighting & Technology Corporation, Mellow 5N, three band type daylight fluorescent lamp) was set, then a light of the fluorescent lamp was reflected on the antireflection film surface of the test specimen, and occurrence of a rainbow pattern (interference fringe) due to interference of the light was visually observed.
AA: No interference fringe is observed.
BB: Interference fringe is slightly observed, but it is inconspicuous.
CC: Interference fringe is observed, and it is conspicuous.
DD: Glaring interference fringe is observed.

### (2) Mar resistance test

A surface of the test specimen was rubbed with Bonstar Steel Wool #0000 (available from Nippon Steel Wool Co., Ltd.) at a rate of 30 strokes/60 seconds under application of a load of 700 g to the wool, and a degree of marring was visually judged.
AA: A marred area is less than 10%.
BB: A marred area is not less than 10% and less than 20%.
CC: A marred area is not less than 20% and less than 50%.
DD: A marred area is not less than 50%.

### (3) Adhesion test

On a lens surface, cut lines were made with a knife at regular intervals of 1 mm to form 100 squares (each: 1 square mm). After a Cellophane adhesive tape was strongly pressed against the thus treated lens surface, the tape was abruptly pulled up in the direction of 90°. Then, the number of squares remaining unpeeled was counted, and the adhesion was evaluated based on the following criteria.
AA: The number of remaining squares is 100.
BB: The number of remaining squares is in the range of 90 to 99.
CC: The number of remaining squares is in the range of 80 to 89.
DD: The number of remaining squares is less than 80. (4) Hot water resistance test
After the test specimen was immersed in hot water of 80°C for 10 minutes, the above-mentioned adhesion test was carried out, and the hot water resistance was evaluated based on the following criteria.
AA: The number of remaining squares is 100.
BB: The number of remaining squares is in the range of 90 to 99.
CC: The number of remaining squares is in the range of 80 to 89.
DD: The number of remaining squares is less than 80.

### (5) Weathering resistance test (appearance)

Exposure of 100 hours was carried out using a Xenon weatherometer (Suga Test Instrument Co., Ltd., SX75 model). Then, appearance (occurrence of cracking) was observed and evaluated based on the following criteria.
AA: No cracking is observed.
BB: Cracking is slightly observed, but it is inconspicuous.
CC: Cracking is observed, and it is conspicuous.

### (6) Weathering resistance test (adhesion)

Exposure of 100 hours was carried out using a Xenon weatherometer (Suga Test Instrument Co., Ltd., SX75 model). Then, the above-mentioned adhesion test was carried out, and the adhesion was evaluated based on the following criteria.
AA: The number of remaining squares is not less than 91.
BB: The number of remaining squares is in the range of 70 to 90.
CC: The number of remaining squares is in the range of 50 to 69.
DD: The number of remaining squares is less than 50.

### (7) Weathering resistance test (discoloration)

Exposure to ultraviolet rays of 70 hours was carried out using a QUV test device (manufactured by Q-Panel Lab Products, using UVA lamp). Then, discoloration of a substrate with a transparent film was visually observed under a light of a three band fluorescent lamp, and the substrate was evaluated substrated on the following criteria.
AA: Discoloration is slightly observed.
BB: Discoloration is clearly observed.
CC: Conspicuous discoloration is observed.

### Example 2

### Preparation of titanium-based core particle (TN-2) dispersion sol

With 93.665 kg of a titanium tetrachloride solution having a concentration of 7.75% by weight in terms of TiO₂, 36.295 kg of aqueous ammonia having a concentration of 15% by weight was mixed to neutralize the solution, whereby a.white slurry was obtained. This slurry was filtered and then cleaned to obtain 54.579 kg of a cake of a hydrous titanic acid gel having a solids concentration of 13.3% by weight.

To 7.519 kg of the cake, 11.429 kg of hydrogen peroxide water having a concentration of 35% by weight and 59.148 kg of water were added, and they were heated at 80°C for 2 hours to dissolve the cake. Then, 21.9 kg of water was added to obtain a peroxotitanic acid aqueous solution having a concentration of 1.0% by weight in terms of TiO₂.

To the resulting peroxotitanic acid aqueous solution, 8.906 kg of a potassium stannate aqueous solution having a concentration of 1.02% by weight in terms of SnO₂ was added, and they were sufficiently stirred and then subjected to deionization with a cation-exchange resin. After deionization, 1818 g of a silica sol (silica concentration: 15% by weight) was added so that the amount of SiO₂ should become 272.7 g, then 25.6 kg of water was added so that the solids concentration should become 1% by weight, and they were heated in an autoclave at 140°C for 18 hours to perform hydrolysis. The resulting colloidal solution,was concentrated to obtain a titanium-based core particle (TN-2) dispersion sol having a solids concentration of 10% by weight. The titanium-based core particles (TN-2) had an average particle diameter of 12.8 nm.

### Preparation of transparent film-forming coating liquid (FS-2)

An antimony oxide coated titanium-based composite oxide particle (AT-2) dispersion aqueous sol was prepared in the same manner as in Example 1, except that the titanium-based core particles (TN-2) were used as titanium-based core particles, and in the preparation of the water dispersion sol of the titanium-based core particles (TN-1) each of which had an intermediate thin layer, the amount of the hydrogen peroxide solution of zirconium was changed to 427 g and the amount of the silicic acid solution was changed to 1323 g, and in the formation of the antimony oxide coating layer, the amount of the antimonic acid compound aqueous solution was changed to 9.09 kg, 15.91 g of water was added, and heating was carried out at 175°C. Using the aqueous sol, an organosol, then a surface-modified sol (ST-2) and then a transparent film-forming coating liquid (FS-2) were each prepared in the same manner as in Example 1. After the formation of an intermediate thin layer, the average particle diameter was 12.8 nm. The average particle diameter of the antimony oxide coated titanium-based composite oxide particles (ST-2) was 13.4 nm.

### Preparation of substrate with transparent film (PL-2)

A substrate with a transparent film (PL-2) was prepared in the same manner as in Example 1, except that the transparent film-forming coating liquid (FS-2) was used. Then, various properties of the substrate with a transparent film (PL-2) were evaluated. The results are set forth in Table 1.

### Example 3

### Preparation of transparent film-forming coating liquid (FS-3)

A dispersion sol (solids concentration: 10% by weight) of titanium-based core particles (TN-3, average particle diameter: 5.9 nm) composed of titanium oxide and tin oxide was obtained in accordance with the process described in the steps (a) to (d) of Example 3 of Japanese Patent Laid-Open Publication No. 245224/1998.

Then, an antimony oxide coated titanium-based composite oxide particle (AT-3) dispersion aqueous sol was prepared by forming an antimony oxide coating layer in the same manner as in Example 1, except that the titanium-based core particle (TN-3) dispersion sol was used instead of the dispersion sol of the titanium-based core particles (TN-1) each of which had an intermediate thin layer composed of silicon oxide and zirconium oxide. Using the aqueous sol, an organosol, then a surface-modified sol (ST-3) and then a transparent film-forming coating liquid (FS-3) were each prepared in the same manner as in Example 1. The average particle diameter of the antimony oxide coated titanium-based composite oxide particles (AT-3) was 6.3 nm.

### Preparation of substrate with transparent film (PL-3)

A substrate with a transparent film (PL-3) was prepared in the same manner as in Example 1, except that the transparent film-forming coating liquid (FS-3) was used. Then, various properties of the substrate with a transparent film (PL-3) were evaluated. The results are set forth in Table 1.

### Example 4 ,

### Preparation of antimony pentaoxide-based core particle (TN-1) dispersion sol

In a solution obtained by dissolving 2.86 kg of caustic potash (available from Asahi Glass Co., Ltd., purity: 85% by weight) in 89 kg of water, 5.56 kg of antimony trioxide (available from Nihon Seiko Co., Ltd., ATOX-R, purity: 99% by weight) was suspended. The suspension was heated to 100°C, and to the suspension, an aqueous solution obtained by diluting an oxidizing agent (2.93 kg of hydrogen peroxide water having concentration of 35% by weight) with 9.65 kg of water was added over a period of 7 hours. The resulting solution was aged at 98°C for 10 hours, then cooled and filtered to prepare a potassium antimonate aqueous solution having a solids concentration of 7%. The aqueous solution had pH of 12.5.

With cooling and stirring 55 kg of the aqueous solution, 243 kg of water was added to dilute the aqueous solution. The dilute solution was subjected to dealkalization with a cation-exchange resin, then heated at 98°C for 20 hours and concentrated to prepare an antimony pentaoxide-based core particle (TN-4) dispersion aqueous sol having a solids concentration of 14.5 %.

The average particle diameter of the antimony pentaoxide-based core particles (TN-4) was 21.2 nm.

### Formation of antimony oxide coating layer

In a solution obtained by dissolving 285 g of caustic potash (available from Asahi Glass Co., Ltd., purity: 85% by weight) in 9000 g of water, 555 g of antimony trioxide (available from Nihon Seiko Co., Ltd., ATOX-R, purity: 99% by weight) was suspended. The suspension was heated to 100°C, and to the suspension, an aqueous solution obtained by diluting an oxidizing agent (146.5 g of hydrogen peroxide water having concentration of 35% by weight) with 1100 g of water was added over a period of 14 hours to prepare an antimonic acid compound aqueous solution.

To 3 kg of the antimony pentaoxide-based core particle (TN-4) dispersion aqueous sol, 21.75 kg of water was added so that the solids concentration should become 2% by weight, and to the sol was added an antimonic acid compound aqueous solution having a concentration of 2% by weight in terms of Sb₂O₅ obtained by adding 15.91 kg of water to 9.09 kg of the above-obtained antimonic acid compound aqueous solution. With deionizing the mixture by an ion-exchange resin, coating with an antimony oxide precursor was carried out.

Then, water was added so that the solids concentration should become 1% by weight, and thereafter heat treatment was carried out in an autoclave at 98°C for 18 hours. The resulting colloidal solution was concentrated to obtain an antimony oxide coated antimony pentaoxide fine particle (AT-4) dispersion aqueous sol having a solids concentration of 10% by weight. The average particle diameter of the antimony oxide coated antimony pentaoxide fine particles (AT-4) was 22.5 nm.

The water as a dispersion medium for the antimony oxide coated antimony pentaoxide fine particles (AT-4) was replaced with methanol, and the resulting sol was concentrated until the solids concentration became 20% by weight, whereby an organosol of the antimony oxide coated antimony pentaoxide fine particles (AT-4) was prepared.

### Performance of surface modification treatment

In a reaction vessel, 1000 g of the organosol of the antimony oxide coated antimony pentaoxide fine particles (AT-4) was placed. With stirring the organozol, 56 g of methyltrimethoxysilane and 20 g of water were added to the organosol, followed by heating to 50°C. Subsequently, the mixture was concentrated to prepare an organosol (solids concentration: 20% by weight) of antimony oxide coated antimony pentaoxide fine particles (ST-4) having been surface-modified with methyltrimethoxysilane.

### Preparation of transparent film-forming coating liquid (FS-4)

A transparent film-forming coating liquid (FS-4) was prepared in the same manner as in Example 1, except that 510 g of the antimony oxide coated antimony pentaoxide fine particle (ST-4) organosol was used instead of 280 g of the antimony oxide coated titanium-based composite' oxide particle (ST-1) organosol.

### Preparation of substrate with transparent film (PL-4)

A substrate with a transparent film (PL-4) was prepared in the same manner as in Example 1, except that the transparent film-forming coating liquid (FS-4) was used. Then, various properties of the substrate with a transparent film (PL-4) were evaluated. The results are set forth in Table 1.

### Example 5

### Preparation of antimony oxide coated titanium-based composite oxide particles (ST-5)

Using the antimony oxide coated titanium-based composite oxide particles (ST-1) prepared in Example 1, antimony oxide coated titanium-based composite oxide particles (ST-5) having been surface-modified with tetraethoxysilane were prepared in the same manner as in Example 1, except that in the surface modification treatment, methyltrimethoxysilane was replaced with tetraethoxysilane.

### Preparation of transparent film-forming coating liquid (FS-5)

A transparent film-forming coating liquid (FS-5) was prepared in the same manner as in Example 1, except that the antimony oxide coated titanium-based composite oxide particles (ST-5) having been surface-modified with tetraethoxysilane were used instead of the antimony oxide coated titanium-based composite oxide particles (ST-1) having been surface-modified with methyltrimethoxysilane.

### Preparation of substrate with transparent film (PL-5)

A substrate with a transparent film (PL-5) was prepared in the same manner as in Example 1, except that the transparent film-forming coating liquid (FS-5) was used. Then, various properties of the substrate with a transparent film (PL-5) were evaluated. The results are set forth in Table 1.

### Example 6

### Preparation of antimony oxide coated antimony pentaoxide fine particles (ST-6)

Antimony oxide coated antimony pentaoxide fine particles (ST-6) having been surface-modified with γ-glycidoxypropyltrimethoxysilane were prepared in the same manner as in Example 4, except that 56 g of methyltrimethoxysilane was replaced with 82 g of γ-glycidoxypropyltrimethoxysilane

### Preparation of transparent film-forming coating liquid (FS-6) .

A transparent film-forming coating liquid (FS-6) was prepared in the same manner as in Example 4, except that the antimony oxide coated antimony pentaoxide fine particles (ST-6) were used instead of the antimony oxide coated antimony pentaoxide fine particles (ST-4).

### Preparation of substrate with transparent film (PL-6)

A substrate with a transparent film (PL-6) was prepared in the same manner as in Example 1, except that the transparent film-forming coating liquid (FS-6) was used. Then, various properties of the substrate with a transparent film (PL-6) were evaluated. The results are set forth in Table 1.

### Example 7

### Transparent film-forming coating liquid (FS-10)

A transparent film-forming coating liquid (FS-10) was prepared in the same manner as in Example 4, except that in the preparation of transparent film-forming coating liquid (FS-4), the antimony oxide coated titanium-based composite oxide particle (AT-4) dispersion organosol (which had not been surface-modified) was used instead of the antimony oxide coated antimony pentaoxide fine particle (ST-4) organosol. The resulting coating liquid was slightly turbid, and aggregates were confirmed.

### Preparation of substrate with transparent film (PL-10)

A substrate with a transparent film (PL-10) was prepared in the same manner as in Example 1, except that the transparent film-forming coating liquid (FS-10) was used. Then, various properties of the substrate with a transparent film (PL-10) were evaluated. The results are set forth in Table 1.

### Comparative Example 1

### Transparent film-forming coating liquid (CFS-1)

A transparent film-forming coating liquid (CFS-1) was prepared in the same manner as in Example 1, except that the antimony oxide coated titanium-based composite oxide particles (ST-1) were not added.

### Preparation of substrate with transparent film (CPL-1)

A substrate with a transparent film (CPL-1) was prepared in the same manner as in Example 1, except that the transparent film-forming coating liquid (CFS-1) was used. Then, various properties of the substrate with a transparent film (CPL-1) were evaluated. The results are set forth in Table 1.

### Comparative Example 2

### Transparent film-forming coating liquid (CFS-2)

A transparent film-forming coating liquid (CFS-2) was tried to be prepared in the same manner as in Example 2, except that an organosol coating titanium-based composite fine particles which had not been coated with antimony oxide but had been surface-modified with tetraethoxysilane instead of the antimony oxide coated titanium-based composite oxide particles (ST-1) (said organosol: available from Catalysts & Chemicals Industries Co., Ltd., Optolake 1120Z (S-7/A8), average particle diameter: 9 nm, solids concentration: 30% by weight, dispersion medium: methyl alcohol) was diluted to' a solids concentration of 20% by weight with methyl alcohol and the resulting dilute organosol was used. In the preparation, however, the coating solution gelled. On this account, a substrate with a transparent film was not prepared.
(titanium oxide-containing core particle in Optolake 1120Z (S-7/A8): TiO₂/ZrO2=51.2, intermediate thin layer: SiO₂+ZrO₂/titanium oxide-containing composite oxide particle=4.88)

### Comparative Example 3

### Transparent film-forming coating liquid (CFS-3)

A transparent film-forming coating liquid (CFS-3) was prepared in the same manner as in Example 3, except that in the preparation of transparent film-forming coating liquid (FS-3), only 2.2 g of aluminum acetylacetonate (i.e., curing agent [a]) was used as the curing agent.

### Preparation of base with transparent film (CPL-3)

A base with a transparent film (CPL-3) was prepared in the same manner as in Example 1, except that the transparent film-forming coating liquid (CFS-3) was used. Then, various properties of the base with a transparent film (CPL-3) were evaluated. The results are set forth in Table 1.

### Comparative Example 4

### Transparent film-forming coating liquid (CFS-5)

A transparent film-forming coating liquid (CFS-5) was prepared in the same manner as in Example 8, except that in the preparation of transparent film-forming coating liquid (FS-8), only 2.0 g of 2-ethylimidazole (i.e., curing agent [b]) was used as the curing agent.

### Preparation of base with transparent film (CPL-5)

A base with a transparent film (CPL-5) was prepared in the same manner as in Example 1, except that the transparent film-forming coating liquid (CFS-5) was used. Then, various properties of the base with a transparent film (CPL-5) were evaluated. The results are set forth in Table 1.

Table 1

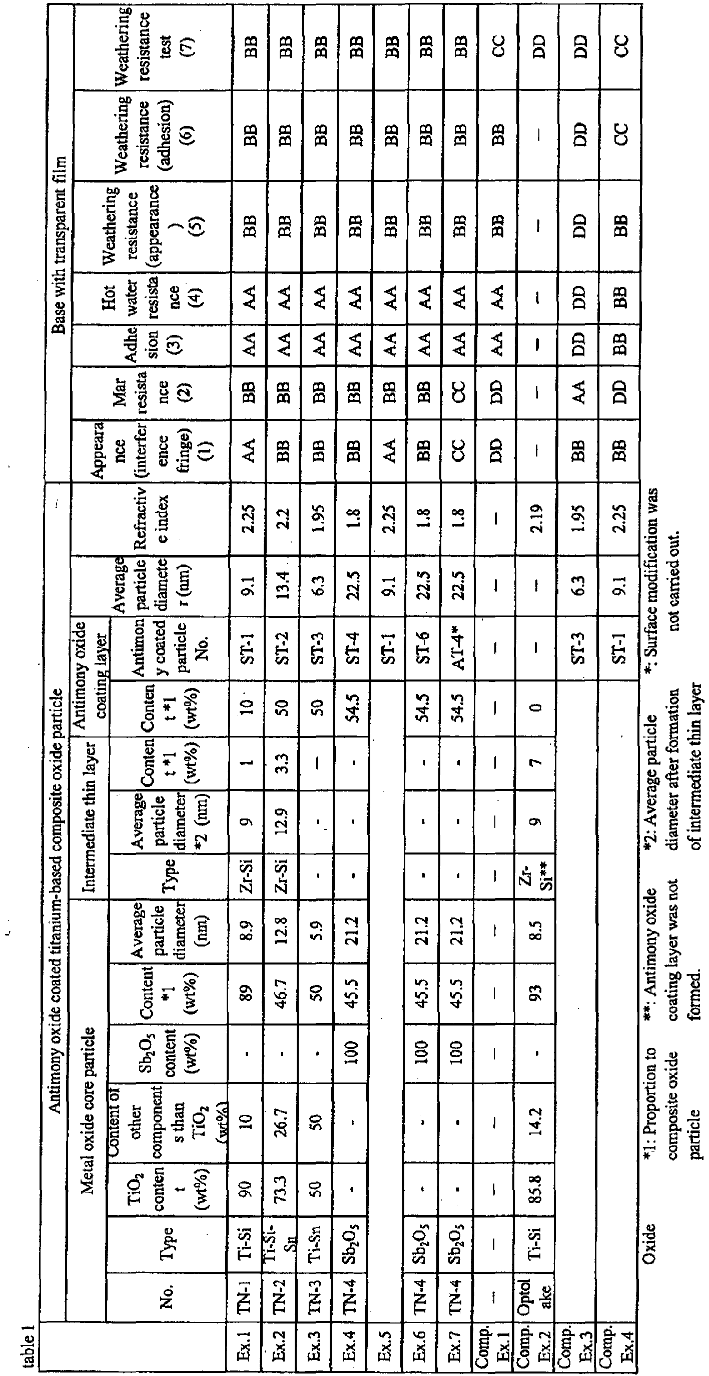

As can be seen from the results shown in Table 1, the substrates with transparent film (Example 1 to 6) using a transparent film-forming coating liquid containing the essential components which are features of the present invention had favorable appearance and excellent mar resistance, adhesion, hot water resistance and weathering resistance.

In comparison therewith, Comparative Example 1, which did not contain metal oxide fine particles constituted of a metal oxide core particle and a coating layer composed of antimony oxide, was inferior in appearance and mar resistance though it had good adhesion, hot water resistance and weathering resistance.

Comparative Example 2, which used titanium-based composite fine particles coated with no antimony oxide, underwent gelation in the preparation process. Comparative Example 3 containing only the curing agent (A) was inferior in adhesion, hot water resistance and weathering resistance. Comparative Example 4 containing only the curing agent (B) was inferior in mar resistance.

## Claims

1. A transparent film-forming coating liquid comprising the following components (A) to (D):
(A) an organosilicon compound and/or a hydrolyzate of the organosilicon compound,
(B) metal oxide fine particles each of which comprises a metal oxide core particle and a coating layer composed of antimony oxide,
(C) a curing agent (curing agent A) consisting of a polythiol compound, and one or both of an organic polycarboxylic acid and an acetylacetone metal complex, and
(D) a curing agent (curing agent B) comprising a compound containing basic nitrogen.

2. The transparent film-forming coating liquid as claimed in claim 1, wherein the metal oxide fine particles (B) have been surface-modified with an organosilicon compound or an amine compound.

3. The transparent film-forming coating liquid as claimed in claim 1 or 2, wherein at least a part of the organosilicon compound (A) is an epoxy group-containing organosilicon compound, and the content of the epoxy group-containing organosilicon compound in the whole of the organosilicon compound is not less than 60% by weight as a solids content.

4. The transparent film-forming coating liquid as claimed in any one of claims 1 to 3, wherein the antimony oxide to form the coating layer has an antimony oxidation number of 3 to 5.

5. The transparent film-forming coating liquid as claimed in claim 4, wherein the proportion of the coating layer is in the range of 1 to 90% by weight in terms of Sb₂O₅.

6. The transparent film-forming coating liquid as claimed in any one of claims 1 to 5, wherein the metal oxide core particle contains antimony pentaoxide or titanium oxide as a main component.

7. The transparent film-forming coating liquid as claimed in claim 6, wherein the metal oxide core particle contains titanium oxide as a main component and further contains an oxide of one or more elements selected from the group consisting of Si, Al, Sn, Zr, Fe, Sb, Nb, Ta and W in an amount of less than 10% by weight in terms of an oxide.

8. The transparent film-forming coating liquid as claimed in any one of claims 1 to 7, wherein between the metal oxide core particle and the coating layer, one or more intermediate thin layers composed of an oxide of one or more elements selected from the group consisting of Si, Al, Sn, Zr, Sb, Nb, Ta and W are formed.

9. A substrate with a transparent film, which has, on a polycarbonate substrate surface, a transparent film formed by the use of the transparent film-forming coating liquid of any one of claims 1 to 8.

10. The substrate with a transparent film as claimed in claim 9, wherein the transparent film has a refractive index of not less than 1.54.

11. The substrate with a transparent film as claimed in claim 9 or 10, which has a primer film between the polycarbonate substrate and the transparent film.

12. The substrate with a transparent film as claimed in any one of claims 9 to 11, which further has an antireflection film on the transparent film.

## Patentansprüche

1. Eine transparente schichtbildende Beschichtungsflüssigkeit, umfassend die nachstehenden Komponenten (A) bis (D):
(A) eine Organosiliziumverbindung und/oder ein Hydrolysat der Organosiliziumverbindung,
(B) feine Metalloxidteilchen, die jeweils ein Metalloxidkernteilchen und eine Beschichtungsschicht, die aus Antimonoxid aufgebaut ist, umfassen,
(C) ein Vernetzungsmittel (Vernetzungsmittel A), das aus einer Polythiolverbindung und einem oder beiden aus einer organischen Polycarbonsäure und einem Acetylacetonmetallkomplex besteht und
(D) ein Vernetzungsmittel (Vernetzungsmittel B), das eine Verbindung, die basischen Stickstoff enthält, umfasst.

2. Die transparente schichtbildende Beschichtungsflüssigkeit wie in Anspruch 1 beansprucht, wobei die feinen Metalloxidteilchen (B) mit einer Organosiliziumverbindung oder einer Aminverbindung oberflächenmodifiziert wurden.

3. Die transparente schichtbildende Beschichtungsflüssigkeit wie in Anspruch 1 oder 2 beansprucht, wobei mindestens ein Teil der Organosiliziumverbindung (A) eine Epoxidrest enthaltende Organosiliziumverbindung ist und der Gehalt der Epoxidrest enthaltenden Organosiliziumverbindung in der gesamten Organosiliziumverbindung nicht weniger als 60 Gew.-% als Feststoffgehalt beträgt.

4. Die transparente schichtbildende Beschichtungsflüssigkeit wie in einem der Ansprüche 1 bis 3 beansprucht, wobei das Antimonoxid, das die Beschichtungsschicht bildet, eine Antimon Oxidationszahl von 3 bis 5 aufweist.

5. Die transparente schichtbildende Beschichtungsflüssigkeit wie in Anspruch 4 beansprucht, wobei der Anteil der Beschichtungsschicht im Bereich von 1 bis 90 Gew.-% bezüglich Sb₂O₅ liegt.

6. Die transparente schichtbildende Beschichtungsflüssigkeit wie in einem der Ansprüche 1 bis 5 beansprucht, wobei das Metalloxidkernteilchen Antimonoxidpentaoxid oder Titanoxid als Hauptkomponente enthält.

7. Die transparente schichtbildende Beschichtungsflüssigkeit wie in Anspruch 6 beansprucht, wobei das Metalloxidkernteilchen als Hauptkomponente Titanoxid enthält und ferner ein Oxid aus einem oder mehr Elementen enthält, ausgewählt aus der Gruppe bestehende aus Si, Al, Sn, Zr, Fe, Sb, Nb, Ta und W in einer Menge von weniger als 10 Gew.-% bezüglich eines Oxids.

8. Die transparente schichtbildende Beschichtungsflüssigkeit wie in einem der Ansprüche 1 bis 7 beansprucht, wobei zwischen dem Metalloxidkernteilchen und der Beschichtungsschicht eine oder mehr dazwischenliegende Dünnschichten, die aus einem Oxid aus einem oder mehr Elementen, ausgewählt aus der Gruppe bestehend aus Si, Al, Sn, Zr, Sb, Nb, Ta und W gebildet werden.

9. Ein Substrat mit einer transparenten Folie, welches auf einer Polycarbonatsubstratoberfläche einen transparente Folie, gebildet durch die Verwendung der transparenten schichtbildenden Beschichtungsflüssigkeit gemäß einem der Ansprüche 1 bis 8, aufweist.

10. Das Substrat mit einer transparenten Folie wie in Anspruch 9 beansprucht, wobei die transparente Folie einen Brechungsindex von nicht weniger als 1,54 aufweist.

11. Das Substrat mit einer transparenten Folie wie in Anspruch 9 oder 10 beansprucht, welches eine Primerfolie zwischen dem Polycarbonatsubstrat und der transparenten Folie aufweist.

12. Das Substrat mit einer transparenten Folie wie in einem der Ansprüche 9 bis 11 beansprucht, welches ferner eine Antireflexfolie auf der transparenten Folie aufweist.

## Revendications

1. Liquide de revêtement filmogène transparent comprenant les composants (A) à (D) suivants :
(A) un composé d'organosilicium et/ou un produit d'hydrolyse du composé d'organosilicium,
(B) de fines particules d'oxyde métallique, dont chacune comprend une particule de noyau d'oxyde métallique et une couche de revêtement constituée d'oxyde d'antimoine,
(C) un agent durcisseur (agent durcisseur A) constitué d'un composé de polythiol et d'un poly(acide carboxylique) organique ou d'un complexe métallique d'acétylacétone, ou des deux, et
(D) un agent durcisseur (agent durcisseur B) comprenant un composé contenant de l'azote basique.

2. Liquide de revêtement filmogène transparent selon la revendication 1, dans lequel les fines particules d'oxyde métallique (B) ont été modifiées en surface avec un composé d'organosilicium ou un composé d'amine.

3. Liquide de revêtement filmogène transparent selon la revendication 1 ou 2, dans lequel au moins une partie du composé d'organosilicium (A) est un composé d'organosilicium contenant un groupe époxy et la teneur du composé d'organosilicium contenant un groupe époxy dans l'ensemble du composé d'organosilicium n'est pas inférieure à 60 % en poids en teneur en matières solides.

4. Liquide de revêtement filmogène transparent selon l'une quelconque des revendications 1 à 3, dans lequel l'oxyde d'antimoine destiné à former la couche de revêtement a un nombre d'oxydation de l'antimoine de 3 à 5.

5. Liquide de revêtement filmogène transparent selon la revendication 4, dans lequel la proportion de la couche de revêtement est dans la plage de 1 à 90 % en poids en termes de Sb₂O₅.

6. Liquide de revêtement filmogène transparent selon l'une quelconque des revendications 1 à 5, dans lequel la particule de noyau d'oxyde métallique contient du pentaoxyde d'antimoine ou de l'oxyde de titane en tant que composant principal.

7. Liquide de revêtement filmogène transparent selon la revendication 6, dans lequel la particule de noyau d'oxyde métallique contient de l'oxyde de titane en tant que composant principal et contient en outre un oxyde d'un ou de plusieurs éléments choisis dans le groupe constitué de Si, Al, Sn, Zr, Fe, Sb, Nb, Ta et W dans une quantité inférieure à 10 % en poids en termes d'oxyde.

8. Liquide de revêtement filmogène transparent selon l'une quelconque des revendications 1 à 7, dans lequel, entre la particule de noyau d'oxyde métallique et la couche de revêtement, une ou plusieurs couches minces intermédiaires constituées d'un oxyde d'un ou de plusieurs éléments choisis dans le groupe constitué de Si, Al, Sn, Zr, Sb, Nb, Ta et W sont formées.

9. Substrat portant un film transparent qui a, sur une surface de substrat de polycarbonate, un film transparent formé à l'utilisation du liquide de revêtement filmogène transparent selon l'une quelconque des revendications 1 à 8.

10. Substrat portant un film transparent selon la revendication 9, dans lequel le film transparent a un indice de réfraction non inférieur à 1,54.

11. Substrat portant un film transparent selon la revendication 9 ou 10 qui porte un film de fond entre le substrat de polycarbonate et le film transparent.

12. Substrat portant un film transparent selon l'une quelconque des revendications 9 à 11 qui porte en outre un film anti-réflexion sur le film transparent.
